# FASCICULE DE BREVET EUROPEEN

(11) **EP 0 390 695 B1**
(45) Date de publication et mention de la délivrance du brevet: **25.08.1993**
(21) Numéro de dépôt: 90400870.3
(22) Date de dépôt: 30.03.1990
(51) Int. Cl.: F16L 37/12, F16B 7/04

(54) **Dispositif pour l'assemblage des éléments constituant un conduit circulaire**
Vorrichtung zum Zusammensetzen von Elementen, die eine kreisförmige Leitung bilden
Device for assembling elements constituting a circular duet

(30) Priorité: 30.03.1989 FR 8904639
(43) Date de publication de la demande: 03.10.1990
(73) Titulaire: Zabiegly, Richard, F-59110 La Madeleine (FR)
(72) Inventeur: Zabiegly, Richard, F-59110 La Madeleine (FR)
(74) Mandataire: Maureau, Philippe

(56) Documents cités:
- FR-A- 1 282 087
- US-A- 3 122 383
- US-A- 3 514 135
- US-A- 3 905 623

## Description

L'invention concerne un dispositif pour le raccordement des différents éléments constituant un conduit.

Le dispositif, selon l'invention, destiné aux conduits circulaires de faible épaisseur, peut par extension et combinaisons, s'appliquer à tout autre de quelconque nature.

Traditionnellement, dans la majorité des cas, l'assemblage des différents éléments se fait par emboîtement à section fixe.

La tolérance des pièces ou leurs déformations lors du transport, rendent problématique cette exécution.

En fonction de la section du conduit ou de son implantation, elle se transfrorme en une difficulté majeure.

C'est pourquoi, a partir de certaines dimensions ou situation, les conduits avec brides, plus onéreux, sont retenus.

La fixation de cet assemblage est réalisée au moyen de quelques rivets ou vis autotaraudeuses.

Toutefois, toute gêne proche du conduit, empêche une répartition uniforme sur la périphérie des points de fixation.

Aussi, la faiblesse de tels raccords, nécessite un plus grand nombre de suspensions.

La solidité mécanique précaire de ce type de liaison, dûe également aux emboîtements trop lâches, ne permet pas l'assemblage au sol de grandes longueurs.

Quant à l'étanchéité, elle est réalisée par un enduit intérieur avec emboîtement, ou extérieur au droit du raccordement, intervention qui se termine par un calfeutrement, quand l'assemblage présente un jeu trop important.

Un autocollant dit de propreté est indispensable pour cacher les traces visibles de l'enduit, quant le réseau est apparent.

D'autres variantes sont également utilisées, telles que, brides ou manchettes thermodurcissables;

En dehors de certains des inconvénients précédemment cités, elles restent d'un coût tres élevé.

Le document US-A-3 514 135 décrit un dispositif d'assemblage de tubes par manchonnage intérieur, dans lequel le manchon est constitué par une virole fendue, dont les deux bords longitudinaux sont rabattus vers l'intérieur et sont associés à des ensembles vis-écrous, en forme de coins, susceptibles de réaliser l'écartement de ces bords.

Le dispositif selon l'invention permet de remédier à ces inconvénients et difficultés.

A cet effet, le dispositif qu'elle concerne, du type comportant une virole équipée de moyens à vis radiale, écrou et élément longitudinal permettant de faire varier son développement, est caractérisé en ce que ledit élément longitudinal est profilé en forme de V articulé, et situé du côté intérieur de la virole, l'arête centrale étant tournée du côté de l'axe de la virole, et les deux bords étant associés, de façon à pouvoir transmettre une poussée augmentant le développement de la virole, à la paroi interne de la virole, de part et d'autre d'un orifice permettant le passage de la vis radiale qui traverse également l'espace ménagé entre les deux extrémités de conduits à assembler ainsi que l'élément longitudinal au niveau de son arête, dont la tête prend appui sur la face extérieure de ces conduits, et sur laquelle est engagé un écrou bloqué en rotation et prenant appui sur l'arête de l'élément longitudinal.

D'autres caractéristiques de l'invention ressortent des sous-revendications.

Le fonctionnement du dispositif décrit précédemment, se déroulera comme suit :

La manchette est formée pour laisser un jeu suffisant facilitant l'emboîtement des éléments à assembler.

Les pièces à réunir viennent en butées contre la vis, de façon à être pincées entre la manchette et la rondelle.

La vis sera orientée pour, par un accès aisé, faciliter le couple à exercer sur cette dernière, par une simple clé.

L'effort exercé sur la seule vis, démultiplié par cette dernière, provoque l'écrasement de la cornière.

La déformation du profil, se traduit par un éloignement des ailes qui pivotent autour du pli affaibli formant charnière.

Ce déplacement engendre une poussée sur les butées formant obstacles, les écarte, et assure un serrage de la rondelle.

Cette extension progressive modifie le diamètre de la manchette en éliminant le jeu initial prévu entre celle-ci et le conduit.

La variation de la dimension sera limitée par la section du réseau à assembler.

Tout serrage supplémentaire engendrera une pression de la manchette sur la paroi intérieure du conduit qu'elle finit par épouser.

Nous obtenons ainsi une liaison mécanique rigide de l'ensemble, et une étanchéité parfaite pour un grand nombre d'applications.

Dans certains cas particuliers, disparités des pièces, sévères exigences, il y aura lieu de prévoir une étanchéité renforcée, voire absolue.

Obtenue par un joint compressé par la rondelle, et le dépôt d'un film de colle ou autre matériau sur le bord intérieur des conduits.

Ce qui aura également pour effet de renforcer la solidité mécanique de l'assemblage.

Le dispositif peut être réalisé en tout matériau simple, composite ou moulé dont les caractéristiques élastiques et mécaniques, répondent aux performances requises.

Selon une variante, les butées sont remplacées par des articulations solidaires à la cornière.

On obtient ainsi une continuité permettant de former la cornière avec le feuillard constituant la manchette.

Les points charnières seront obtenus par affaiblissement de la matière.

Dans ce cas, la cornière ne coiffera plus le chevauchement, mais en sera le prolongement.

Selon une deuxième variante, on utilise une manchette, dont le diamètre est supérieur au conduit à raccorder donc impossible à emboîter.

En standard, la manchette est constituée par un feuillard roulé, dont les extrémités se chevauchent et sont rendues solidaires par points de soudure.

Dans l'axe de ce chevauchement, un certain nombre d'orifices seront poinçonnés, passage d'une vis, d'ergots ou attaches empêchant la rotation de l'écrou approprié, ainsi que des lumières affaiblissant cette zone.

Suivant cet axe, on pliera le feuillard de façon à ce que l'arête formée soit repoussée vers l'intérieur de la manchette d'une certaine profondeur.

Nous obtenons ainsi une section pommée présentant une pointe de coeur rentrante.

Par cerclage extérieur, sangle, ceinture ou autre moyen, on fait varier la section de cette manchette, rendue élastique par la pointe de coeur.

Sa variation sera telle que la nouvelle section obtenue, s'inscrit dans le diamètre du conduit à raccorder, avec le jeu nécessaire facilitant son emboîtement.

Après débridement, la pointe de coeur est compressée par un écrou approprié, contre une plaque de forme adaptée au conduit, et de caractéristiques mécaniques suffisantes, au moyen d'une vis dimensionnée en conséquence.

Ce serrage oblige la manchette à reprendre sa forme initiale, qui ne sera limitée que par la section du conduit.

Le blocage de l'écrou se traduira par une pression de la manchette, sur la majeure partie de la paroi du conduit qu'elle aura épousé.

Seule une pointe de coeur résiduelle traduira la différence initiale entre les diamètres.

Un joint entre la manchette et la platine ou entre la pointe de coeur et le conduit, viendra assurer l'étanchéité de cette imperfection.

En fonction du diamètre, un nombre adéquat de pointes de coeur sera prévu.

L'originalité de cette solution est d'utiliser, en l'accentuant, le défaut majeur d'une manchette standard trop juste.

Les dessins annexés illustrent l'invention :
La figure 1 représente, en coupe, le dispositif selon l'invention ;
La figure 2 représente, en coupe, une variante n° 1 de ce dispositif.
La figure 3 représente, en coupe, une variante n° 2 de ce dispositif.

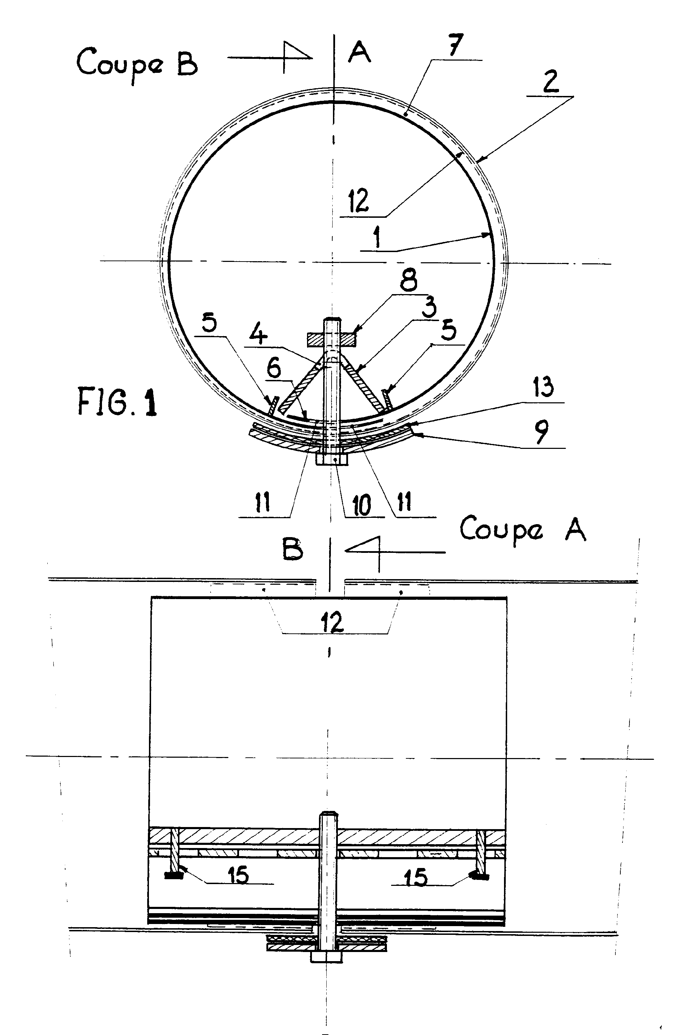

Le dispositif, représenté par la figure 1, comporte une manchette **1** d'un diamètre initial inférieur au conduit **2** à raccorder, et d'une longueur en rapport avec les performances requises.

Un profil **3**, articulé en **4**, est placé entre les butées **5** et couvre le chevauchement **6**.

La longueur du chevauchement **6** sera fonction du jeu initial **7** prévu entre la manchette **1** et le conduit **2**.

Les conduits **2**, le chevauchement **6** et le profil **3** sont pris en sandwich entre un écrou **8** relié à ce dernier par un ergot **15** et une rondelle **9** au moyen d'une vis **10**.

Les orifices **11** de passage de la vis, permettent la variation du chevauchement **6**.

La forme du profil **3** et le nombre de ses articulations **4** seront tels, qu'une pression exercée par l'écrou **8** provoque, par extension du profil **3**, une poussée sur les butées **5**.

La ou les articulations **4** seront obtenues par affaiblissement des zones charnières.

Les dimensions et caractéristiques de la rondelle **9** seront telles que les butées **5** s'écartent sous la poussée exercée.

Le jeu **7** sera résorbé par la modification du diamètre de la manchette **1** provoquée par le déplacement des butées **5**.

La vis **10** sera dimensionnée de façon à démultiplier, sur l'écrou **8**, une force utile qui fasse que la manchette **1** épouse le conduit **2** en y maintenant une pression suffisante pour rendre l'assemblage rigide et étanche.

Complété par un joint **13** et un film **12** de colle, ou autre matériau, il pourra même répondre aux plus sévères exigences.

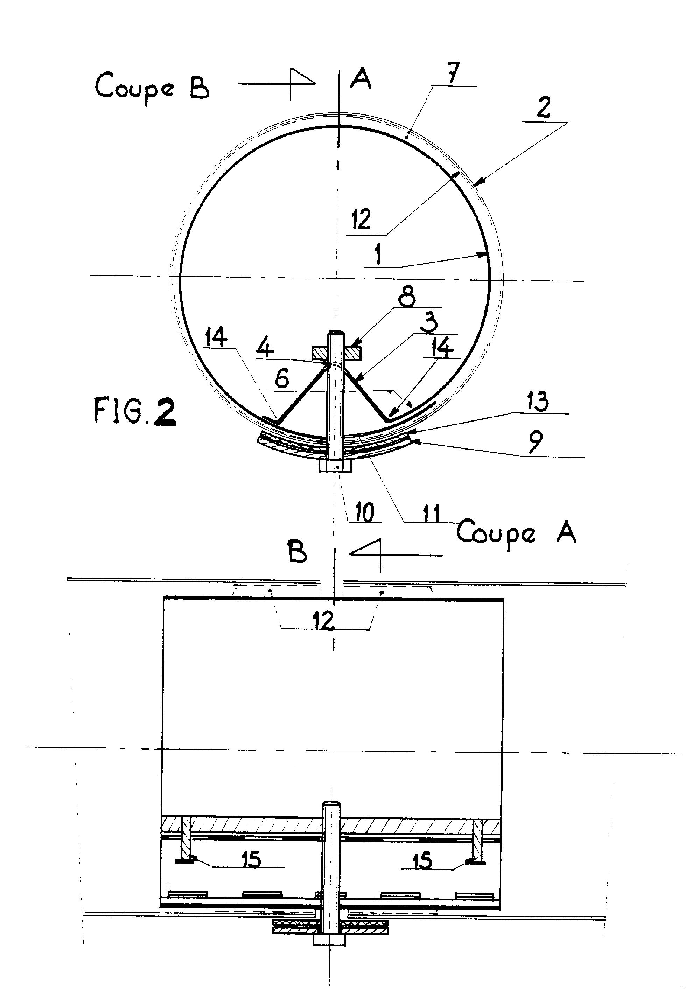

Dans la forme de réalisation, selon la figure 2, le profil **3** est réalisé dans le feuillard et vient en prolongement du chevauchement **6**.

Des articulations **14** remplacent les butées initiales.

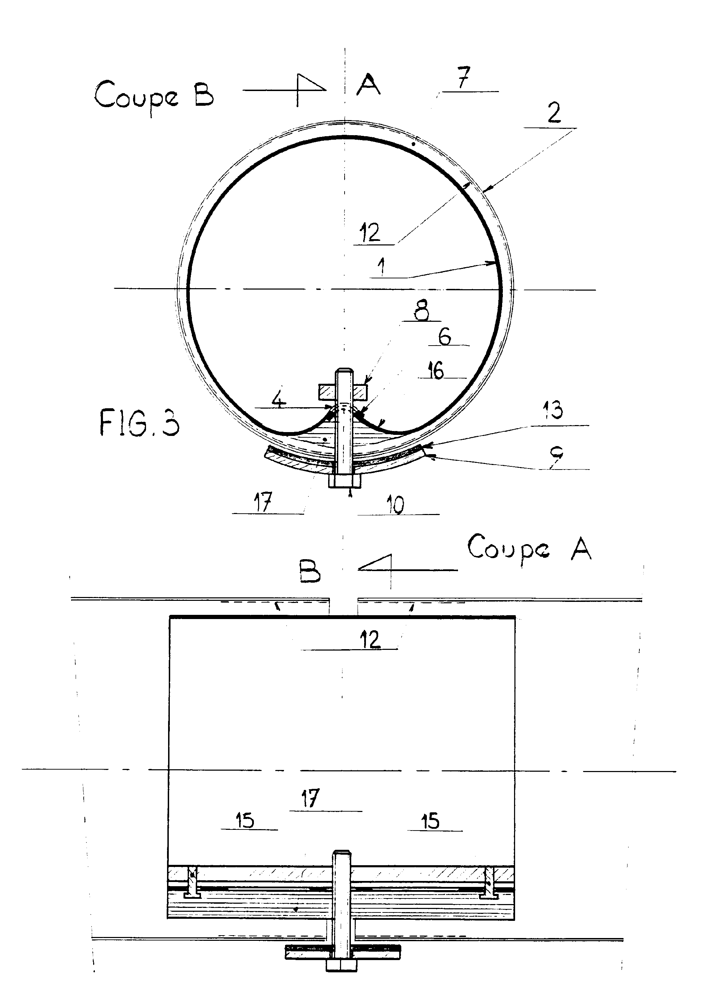

Dans la forme de réalisation selon la figure 3, une manchette circulaire **1** d'un diamètre initial supérieur au conduit **2** est pliée suivant une génératrice charnière **4** située sur le chevauchement **6** pour former une pointe de coeur.

Un joint **17** peut, dans ce cas, remplacer le joint **13** initial.

Le dispositif, selon l'invention, est particulièrement destiné à l'assemblage des gaines et accessoires circulaires employés en ventilation.

## Revendications

1. Dispositif pour l'assemblage de deux conduits ou accessoires de section circulaire utilisés en ventilation, du type comportant une viroie destinée à être emmanchée dans les extrémités des deux conduits à assembler, et équipée de moyens à vis et écrou permettant de faite varier son développement, caractérisé en ce qu'il comprend un élément longitudinal (3) profilé en forme de V, articulé et situé du côté intérieur de la virole (1), dont l'arête centrale est tournée du côté de l'axe de la virole, et dont les deux bords sont associés à la paroi interne de la virole, de part et d'autre d'un orifice (11) permettant le passage d'une vis radiale (10) qui traverse également l'espace ménagé entre les deux extrémités de conduits à assembler, ainsi que l'élément longitudinal (3) au niveau de son arête, dont la tête prend appui sut la face extérieure de ces conduits, et sur laquelle est engagé un écrou (8), bloqué en rotation et prenant appui sur l'arête de l'élément longitudinal (3).

2. Dispositif selon la revendication 1, caractérisé en ce que la viroie (1) comporte une zone de chevauchement de ses deux bords longitudinaux, avec ménagement d'orifices (11) allongés dans le sens périphérique, pour le passage de la vis(10), la face interne de la virole comportant, de part et d'autre de la zone de chevauchement des butées fixes (5), servant à l'appui des deux bords de l'élément longitudinal (3) dont l'arête centrale (4) forme charnière.

3. Dispositif selon la revendication 1, caractérisé en ce que la viroie (1) comporte une zone de chevauchement de ses deux bords longitudinaux, l'élément longitudinal (3) étant réalisé dans le feuillard même formant la virole et les deux boras longitudinaux de l'élément (3) formant des axes d'articulation.

4. Dispositif selon la revendication 1, caractérisé en ce que la virole (1) possède un diamètre initial supérieur au diamètre des conduits (2) à assembler, et dont une partie est enfoncée vers l'intérieur, suivant une ligne longitudinale, pour former une pointe de coeur, la génératrice (4) la plus intérieure formant charnière, et comportant un orifice pour le passage de la vis (10).

5. Dispositif selon l'une quelconque des revendications 1 à 4, caractérisé en ce que l'écrou (8) est ménagé dans une pièce s'étendant longitudinalement dans la virole, formant répartiteur de pression, et fixée sur l'élément longitudinal (3) par des ergots (15), la tête de la vis (10) prenant appui sur la face extérieure des conduits à assembler avec interposition d'une pièce de répartition de pression, telle qu'une platine ou une rondelle.

6. Dispositif selon la revendication 5, caractérisé en ce que la longueur du répartiteur de pression (8) est égale à la longueur de la virole.

7. Dispositif selon l'une quelconque des revendications 1 à 6, caractérisé en ce que les lignes d'articulation (4, 14) sont obtenues par affaiblissement de la zone charnière.

8. Dispositif selon l'une quelconque des revendications 1 à 7, caractérisé en ce qu'un joint (13, 17) ou un film (12), recouvrant la zone d'assemblage des deux conduits, est disposé à la surface de ceux-ci, afin de renforcer mécaniquement l'assemblage ainsi que l'étanchéité.

## Patentansprüche

1. Einrichtung zum Verbinden zweier in der Belüftungstechnik verwendeter Leitungen oder Zubehörteile mit rundem Querschnitt, umfassend eine in den Enden der beiden zu verbindenden Leitungen einzusetzende Schelle, die mit aus radialer Schraube und Mutter sowie einem Längselement bestehenden Mitteln ausgestattet ist, welche eine Veränderung ihrer Abwicklung erlauben,
**dadurch gekennzeichnet,** daß dieses Längselement (3) V-förmig profiliert, gelenkig ausgebildet und an der Innenseite der Schelle (1) angeordnet ist, wobei der zentrale Scheitel zur Seite der Schellenachse gewandt ist und die beiden Ränder in einer Weise, daß sie einen die Abwicklung der Schelle vergrößernden Schub übertragen können, mit der Innenwand der Schelle verbunden sind, und zwar beiderseits einer Öffnung (11), welche den Durchtritt der radialen Schraube (10) ermöglicht, die außerdem den Zwischenraum, welcher zwischen den beiden Enden der zu verbindenden Leitungen besteht, sowie das Längselement (3) im Bereich seines Scheitels durchsetzt, deren Kopf sich ferner an die Außenseite dieser Leitungen anlegt und auf die eine Mutter (8) aufgeschraubt ist, die drehgesichert ist und sich an den Scheitel des Längselementes (3) anlegt.

2. Einrichtung nach Anspruch 1,
**dadurch gekennzeichnet,** daß die Schelle (1) eine Zone der Überlappung ihrer beiden Längsränder aufweist, mit der Ausbildung von in Umfangsrichtung länglich ausgebildeten Öffnungen (11) für den Durchtritt der Schraube (10), wobei die Innenseite der Schelle beiderseits der Überlappungszone feste Anschläge (5) aufweist, die für die Anlage der beiden Kanten des Längselementes (3) dienen, dessen zentraler Scheitel (4) ein Scharnier bildet.

3. Einrichtung nach Anspruch 1,
**dadurch gekennzeichnet,** daß die Schelle (1) eine Zone der Überlappung ihrer beiden Längskanten aufweist, wobei das Längselement (3) an dem die Schelle bildenden Band selbst ausgebildet ist und die beiden Längskanten des Elementes (3) Gelenkachsen bilden.

4. Einrichtung nach Anspruch 1,
**dadurch gekennzeichnet,** daß die Schelle (1) einen entlang einer Längslinie nach innen eingestülpten Bereich aufweist, welcher eine der genannten V-Form entsprechende Herzspitze bildet, wobei die am weitesten innen liegende Mantellinie (4) ein Scharnier bildet und eine Öffnung für den Durchtritt der Schraube (10) aufweist.

5. Einrichtung nach einem der Ansprüche 1 bis 4,
**dadurch gekennzeichnet,** daß die Mutter (8) als Bauteil ausgebildet ist, welches sich in der Schelle in Längsrichtung erstreckt, einen Druckverteiler bildet und auf dem Längselement (3) über Zentrierstifte (15) befestigt ist, wobei der Kopf der Schraube (10) sich an der Außenseite der zu verbindenden Leitungen unter Zwischenschaltung eines Druckverteilungsstückes abstützt, wie beispielsweise einer Platte oder eines Ringes.

6. Einrichtung nach Anspruch 5,
**dadurch gekennzeichnet,** daß die Länge des Druckverteilers (8) gleich der Länge der Schelle ist.

7. Einrichtung nach einem der Ansprüche 1 bis 6,
**dadurch gekennzeichnet,** daß die Gelenklinien (4, 14) durch Schwächungen der Scharnierzone gebildet werden.

8. Einrichtung nach einem der Ansprüche 1 bis 7,
**dadurch gekennzeichnet,** daß eine Dichtung (13, 17) oder ein Film (12), welcher die Verbindungszone der beiden Leitungen überdeckt, auf der Oberfläche derselben angeordnet ist, um die Verbindung ebenso wie die Dichtheit mechanisch zu verbessern.

## Claims

1. Device for connecting two ducts or accessories of circular cross section used in ventilation, of the type having a hoop intended to be fitted into the ends of the two ducts to be connected and provided with means with a radial bolt, nut and longitudinal member enabling its circumference to be varied, characterised in that the said longitudinal member (3) has an articulated V-shaped profile, located on the inside of the hoop (1), the central ridge being oriented towards the axis of the hoop, and the two edges being associated, so as to be able to transmit a thrust increasing the circumference of the hoop, with the internal wall of the hoop, on each side of an orifice (11) enabling the radial bolt (10) to pass, which also passes through the space provided between the two duct ends to be connected, and the longitudinal member (3) at its ridge, the head of which bears on the external face of these ducts, and on which is engaged a nut (8), locked with respect to rotation and bearing on the ridge of the longitudinal member (3).

2. Device according to Claim 1, characterised in that the hoop (1) has a region where its two longitudinal edges overlap, with the provision of orifices (11) elongated in the peripheral direction, for the bolt (10) to pass through, the internal face of the hoop having, on each side of the overlap region, fixed stops (5) serving as a stop for the two edges of the longitudinal member (3), the central ridge (4) of which forms a hinge.

3. Device according to Claim 1, characterised in that the hoop (1) has a region where its two longitudinal edges overlap, the longitudinal member (3) being produced actually from the strip forming the hoop and the two longitudinal edges of the member (3) forming articulation axes.

4. Device according to Claim 1, characterised in that the hoop (1) has a part which is recessed towards the inside, along a longitudinal line, so as to form the apex of a heart corresponding to the said V shape, the innermost generatrix (4) forming a hinge, and including an orifice for the bolt (10) to pass through.

5. Device according to any one of Claims 1 to 4, characterised in that the nut (8) is provided in a part extending longitudinally in the hoop, forming a pressure distributor, and fixed to the longitudinal member (3) by means of pins (15), the head of the bolt (10) bearing on the external face of the ducts to be connected with the interposing of a pressure distribution part, such as a plate or washer.

6. Device according to Claim 5, characterised in that the length of the pressure distributor (8) is equal to the length of the hoop.

7. Device according to any one of Claims 1 to 6, characterised in that the articulation lines (4, 14) are obtained by weakening the hinge region.

8. Device according to any one of Claims 1 to 7, characterised in that a joint (13, 17) or film (12), covering the region where the two ducts are connected, is disposed on the surface of the ducts, in order to strengthen the connection mechanically and to reinforce the seal.
